# EUROPÄISCHE PATENTSCHRIFT

(11) **EP 4 415 954 B1**
(45) Veröffentlichungstag und Bekanntmachung des Hinweises auf die Patenterteilung: **06.05.2026**
(21) Anmeldenummer: 21799197.5
(22) Anmeldetag: 14.10.2021
(51) Int. Cl.: B29C 65/14, B29C 65/20, B29C 65/78

(54) **SCHWEISSMASCHINE UND VERFAHREN ZUR HERSTELLUNG EINER STUMPFSCHWEISSVERBINDUNG**
WELDING MACHINE AND METHOD FOR PRODUCING A BUTT-WELDED JOINT
MACHINE DE SOUDAGE ET PROCÉDÉ DE FABRICATION D'UN JOINT SOUDÉ BOUT À BOUT

(43) Veröffentlichungstag der Anmeldung: 21.08.2024
(73) Patentinhaber: Hürner Schweisstechnik GmbH, 35325 Mücke (DE)
(72) Erfinder: LENZ, Michael, 35325 Muecke (DE); LUEGHAMER, Albert, 4522 Sierning (AT); KRAUS, Florian, 35325 Muecke (DE)
(74) Vertreter: advotec.
(86) Internationale Anmeldenummer: PCT/EP2021/078448
(87) Internationale Veröffentlichungsnummer: WO 2023/061594

(56) Entgegenhaltungen:
- EP-A2- 0 535 454
- EP-A2- 0 663 279
- GB-A- 2 474 241
- JP-A- 2011 011 468
- US-A- 5 743 992
- US-A1- 2015 074 966
- US-B1- 6 550 514

## Beschreibung

Die Erfindung betrifft ein Verfahren zur Herstellung einer Stumpfschweißverbindung zwischen Rohrsegmenten eines Rohres aus einem schweißbaren Kunststoffmaterial mit einer Schweißmaschine sowie eine Schweißmaschine, wobei zwei Rohrsegmente jeweils von einer Spanneinrichtung einer Schweißvorrichtung der Schweißmaschine aufgenommen werden, wobei Schweißkontaktflächen von Rohrendquerschnitten der Rohrsegmente mittels einer Heizeinrichtung der Schweißvorrichtung aufgeschmolzen und nachfolgend die Schweißkontaktflächen zur Ausbildung einer die Rohrsegmente in eine Fügeebene miteinander verbindenden Stumpfschweißnaht mit einem Fügedruck von einer Handhabungseinrichtung der Schweißvorrichtung gegeneinander gepresst werden, wobei die Schweißvorrichtung von einer Steuervorrichtung der Schweißmaschine gesteuert wird.

Derartige Verfahren und Schweißmaschinen sind hinreichend bekannt und werden zum Stumpfschweißen von Kunststoffrohren eingesetzt. Insbesondere werden zwei Rohrsegmente eines durch eine Stumpfschweißverbindung auszubildenden Rohres durch diese miteinander verbunden. Dabei weisen Rohrendquerschnitte der Rohrsegmente regelmäßig einen übereinstimmenden Durchmesser auf und werden in einer Spanneinrichtung mit Spannwerkzeugen aufgenommen, fixiert und relativ zueinander ausgerichtet. Nachfolgend werden die Rohrendquerschnitte der Rohrsegmente mittels einer Heizeinrichtung mit einem Heizelement erwärmt und plastifiziert. Abschließend werden die plastifizierten Rohrendquerschnitte mittels einer Handhabungseinrichtung mit einem Fügedruck gegeneinander gepresst, bis die so ausgebildete Stumpfschweißnaht ausgehärtet ist. Abschließend wird die Spanneinrichtung gelöst und das Rohr kann von der Schweißmaschine getrennt werden.

Das beschriebene Verfahren kann prinzipiell mit der Schweißmaschine vollständig manuell ausgeführt werden. Es kann jedoch auch eine teilautomatisierte oder vollautomatisierte Ausführung vorgesehen sein, bei der die Schweißmaschine eine Steuervorrichtung umfasst, die zumindest teilweise entsprechende Herstellungsschritte zur Herstellung der Stumpfschweißverbindung durch die Schweißmaschine steuert. Eine derartige Schweißmaschine ist aus der EP 3 804 965 A1 bekannt.

Insbesondere wenn Rohrleitungssysteme hoher Qualität hergestellt werden sollen, beispielsweise im Bereich der Halbleiterfertigung und der Produktion von Lebensmitteln und Arzneimitteln, besteht das Problem, dass ungeachtet einer qualitativ hochwertigen Schweißmaschine und der verwendeten Materialien durch Bedienpersonen der Schweißmaschine eine fehlerhafte oder qualitativ minderwertige Stumpfschweißverbindung ausgebildet werden kann. Da Rohrleitungssysteme für diese zuvor genannten Fertigungsstätten regelmäßig sehr komplex sind, können Bedienpersonen beispielsweise versehentlich falsche Rohrsegmente verwenden. Darüber hinaus kann es auch durch eine nicht sachgemäße Bedienung der Schweißmaschine zur Ausbildung fehlerhafter Stumpfschweißverbindungen kommen.

Aus der EP 0 535 454 A2 ist ein Verfahren zur Herstellung einer Stupfschweißverbindung zwischen Rohrsegmenten mit den Merkmalen des Oberbegriffs des Anspruchs 1 bekannt. Im Rahmen des Verfahrens ist vorgesehen, für eine Stupfschweißverbindung zumindest einen Schweißparameter zu ermitteln, diese Ist-Daten mit Soll-Daten zu vergleichen und bei Abweichungen ein Fehlerprotokoll zu erstellen.

Der vorliegenden Erfindung liegt daher die Aufgabe zugrunde, ein Verfahren sowie eine Schweißmaschine zur Herstellung einer Stumpfschweißverbindung vorzuschlagen, das bzw. die eine einfache Herstellung eines Rohrleitungssystems hoher Qualität ermöglicht.

Diese Aufgabe wird durch ein Verfahren mit den Merkmalen des Anspruchs 1 sowie eine Schweißmaschine mit den Merkmalen des Anspruchs 14 gelöst.

Bei dem erfindungsgemäßen Verfahren zur Herstellung einer Stumpfschweißverbindung zwischen Rohrsegmenten eines Rohres aus einem schweißbaren Kunststoffmaterial mit einer Schweißmaschine werden zwei Rohrsegmente jeweils von einer Spanneinrichtung einer Schweißvorrichtung der Schweißmaschine aufgenommen, wobei Schweißkontaktflächen von Rohrendquerschnitten der Rohrsegmente mittels einer Heizeinrichtung der Schweißvorrichtung aufgeschmolzen und nachfolgend die Schweißkontaktflächen zur Ausbildung einer die Rohrsegmente in einer Fügeebene miteinander verbindenden Stumpfschweißnaht mit einem Fügedruck von einer Handhabungseinrichtung der Schweißvorrichtung gegeneinander gepresst werden, wobei die Schweißvorrichtung von einer Steuervorrichtung der Schweißmaschine gesteuert wird, wobei in der Steuervorrichtung der Schweißvorrichtung ein Datenmodell eines Rohrleitungssystems mit zumindest einem Rohr und einer Mehrzahl von Stumpfschweißverbindungen gespeichert wird, wobei das Datenmodell zumindest einen die jeweilige Stumpfschweißverbindung repräsentierenden Objektdatensatz mit jeweils Attributen umfasst, wobei die Steuervorrichtung für die jeweilige Stumpfschweißverbindung zumindest einen Schweißparameter der Schweißvorrichtung als ein weiteres Attribut ermittelt, und dieses dem Objektdatensatz hinzufügt.

Unter einem Rohrleitungssystem wird zumindest ein Rohr verstanden, welches aus einer Mehrzahl von Stumpfschweißverbindungen bzw. einer entsprechenden Anzahl an Rohrsegmenten ausgebildet ist. Das Rohrleitungssystem kann auch eine Vielzahl von Rohren sowie Verbindungen bzw. Abzweigungen von Rohren, umfassen, die Ventile, Behälter, Reaktoren, Maschinen oder dergleichen miteinander verbinden. Unter einem Datenmodell des Rohrleitungssystems wird eine digitale Verkörperung des Rohrleitungssystems verstanden, die durch Mittel zur Datenverarbeitung, wie beispielsweise einem Computer, erstellt und weiterverarbeitet werden kann. Da im Rahmen des erfindungsgemäßen Verfahrens das Datenmodell des Rohrleitungssystems in der Steuervorrichtung gespeichert wird, ist die Steuervorrichtung ebenfalls zur Verarbeitung digitaler Daten ausgebildet und kann daher beispielsweise ein Computer sein. Das Datenmodell des Rohrleitungssystems umfasst Objektdatensätze, die jeweils mit der Schweißmaschine auszubildende Stumpfschweißverbindungen repräsentieren. So kann durch das Speichern des Datenmodells des Rohrleitungssystems in der Steuervorrichtung sichergestellt werden, dass wesentliche, eine Stumpfschweißverbindung beschreibende Daten bereits in der Steuervorrichtung vorliegen. Die jeweiligen Objektdatensätze umfassen ihrerseits Attribute mit den wesentlichen Angaben zu der herzustellenden Stumpfschweißverbindung, beispielsweise Angaben zu der Art der jeweiligen Rohrsegmente. Mögliche Fehler von Bedienpersonen bei einer Übertragung von Daten aus Planungsunterlagen des Rohrleitungssystems in eine Schweißmaschine bzw. Steuervorrichtung können so vermieden werden, da die zur Ausbildung der Stumpfschweißverbindung erforderlichen Informationen bzw. Daten für die Bedienpersonen bereits in der Schweißmaschine gespeichert sind.

Erfindungsgemäß ist darüber hinaus vorgesehen, dass die Steuervorrichtung für die betreffenden Stumpfschweißverbindungen zumindest einen Schweißparameter ermittelt, wie beispielsweise eine Temperatur. Diese Ermittlung des Schweißparameters kann durch Sensoren der Schweißvorrichtung und/oder auch durch eine Berechnung der Steuervorrichtung mittels eines Algorithmus erfolgen. Der betreffende Schweißparameter wird in Form eines weiteren Attributs der Stumpfschweißverbindung dem zugehörigen Objektdatensatz hinzugefügt. Die Steuervorrichtung kann das ermittelte weitere Attribut in dem jeweiligen Objektdatensatz ergänzen und diesen im Rahmen des Datenmodells speichern. So kann eine nachvollziehbare Dokumentation einer Herstellung des Rohrleitungssystems erstellt werden. Dadurch wird auch eine nachvollziehbare Überprüfung einer Einhaltung von Herstellungsvorgaben möglich.

Das Datenmodell kann vor der Ausbildung der Stumpfschweißverbindung in einer Speichereinrichtung der Steuervorrichtung gespeichert werden. Die Steuervorrichtung weist demnach die Speichereinrichtung auf. Die Speichereinrichtung kann prinzipiell jede Art von Datenträger sein, der geeignet ist, Daten bzw. Dateien zu speichern. In der Speichereinrichtung können auch mehrere Datenmodelle von Rohrleitungssystemen gespeichert werden. Die Speichereinrichtung kann auch ein an der Schweißmaschine adaptierbarer Datenträger sein.

Die Steuervorrichtung kann vor, während und/oder nach der Ausbildung der jeweiligen Stumpfschweißverbindung den zumindest einen Schweißparameter der Schweißvorrichtung als das weitere Attribut ermitteln, wobei die Schweißparameter ein Fügedruck, eine Heizelementtemperatur, eine Gerätetemperatur, eine Umgebungstemperatur, ein Herstellungszeitpunkt, eine Schweißzeit und/oder eine Abkühlzeit sein können. Die Steuervorrichtung kann die in dem Objektdatensatz enthaltenen Attribute bereits vor der Ausbildung der Stumpfschweißverbindung zur Berechnung des weiteren Attributs verwenden, beispielsweise eine Wandstärke der Rohrsegmente zur Ermittlung der erforderlichen Heizelementtemperatur. Auch kann die Schweißvorrichtung über einen oder eine Anzahl Sensoren verfügen, mit denen während der Ausbildung der Stumpfschweißverbindung die Steuervorrichtung Messwerte als das weitere Attribut erfassen kann, beispielsweise eine Umgebungstemperatur. Die Steuervorrichtung kann darüber hinaus nach der Ausbildung der Stumpfschweißverbindung die in dem Objektdatensatz enthaltenen Attribute und/oder Messwerte verarbeiten, um das weitere Attribut zu ermitteln, beispielsweise eine Wandstärke der Rohrsegmente in Verbindung mit einer Umgebungstemperatur zur Ermittlung einer erforderlichen Abkühlzeit. Einerseits wird es so möglich, erforderliche Schweißparameter auf Basis der in dem Objektdatensatz enthaltenen Attribute vorauszuberechnen und andererseits diese Schweißparameter während und nach der Ausbildung der Stumpfschweißverbindung zu messen bzw. zu überprüfen.

Die Steuervorrichtung kann die Schweißvorrichtung in Abhängigkeit der Attribute des Objektdatensatzes steuern, wobei die Attribute ein Rohrsegmentdurchmesser, eine Rohrwandstärke, ein Kunststoffmaterial, ein Fertigungszeitpunkt, eine Herstellerbezeichnung, eine Artikelnummer und/oder eine Seriennummer sein können. So können mit diesen Attributen bestimmte Funktionen der Schweißvorrichtung verknüpft sein, beispielsweise eine Heizelementtemperatur in Abhängigkeit des verwendeten Kunststoffmaterials. Auch ist es möglich das verwendete Kunststoffmaterial aus einer Artikelnummer und einer Herstellerbezeichnung abzuleiten, wenn das Kunststoffmaterial nicht als ein Attribut in dem Objektdatensatz enthalten ist. Grundsätzlich wird es jedoch auch möglich, durch diese Attribute einen Herstellprozess der Stumpfschweißverbindung bis auf eine Herstellung der verwendeten Rohrsegmente zurückzuverfolgen.

Mittels einer Anzeigeeinrichtung der Steuervorrichtung kann an eine Bedienperson gerichtete Bedienungsanweisung der Schweißmaschine und das Datenmodell ausgegeben werden. Die Anzeigeeinrichtung kann durch ein oder mehrere Anzeigemittel ausgebildet sein. Die Bedienungsanweisungen können in akustischer und/oder optischer Form signalisiert werden, beispielsweise durch Lichtzeichen, eine graphische Darstellung und/oder Anweisungen in Textform. Die Bedienungsanweisungen können beispielsweise dazu auffordern, die Schweißmaschine mit Rohrsegmenten einer bestimmten Art zu bestücken oder bestimmte Funktionen der Schweißmaschine zu initiieren, wie den Schweißvorgang selbst. Prinzipiell ist es auch denkbar, dass die Schweißmaschine einige oder sämtliche Funktionen teilautomatisiert bzw. vollautomatisiert ausführt. Weiter kann vorgesehen sein, dass die Schweißmaschine das Datenmodell ausgibt. Diese Ausgabe kann durch Anzeige einer Liste mit Objektdatensätzen oder durch eine graphische Darstellung des zu erstellenden Rohrleitungssystems mit der Anzeigevorrichtung erfolgen.

Die Anzeigeeinrichtung kann durch einen oder mehrere Bildschirme ausgebildet werden, wobei in einem ersten Anzeigebereich die Bedienungsanweisungen und in einem zweiten Anzeigebereich das Datenmodell mit den Objektdatensätzen und den jeweiligen Attributen angezeigt werden können. Bei den Bildschirmen kann es sich um berührungssensitive Bildschirme handeln, so dass Bedienpersonen mit der Steuervorrichtung interagieren können, beispielsweise durch quittieren einer Bedienungsanweisung. Durch den zweiten Anzeigebereich für das Datenmodell ist es für Bedienpersonen nicht mehr erforderlich, einen Abgleich mit Planungsunterlagen des Rohrleitungssystems durchzuführen. Das Datenmodell kann dann Planungsunterlagen umfassen, die in der Steuervorrichtung gespeichert sind. Bei einer Bedienung der Schweißmaschine kann eine Bedienperson zunächst aus dem Datenmodell, welches in Form einer graphischen, zwei- oder dreidimensionale Darstellung des Rohrleitungssystems in dem zweiten Anzeigebereich wiedergegeben werden kann, eine herzustellende Stumpfschweißverbindung auswählen. Die in den Objektdatensätzen enthaltenen Attribute können dann von der Steuervorrichtung zur Anzeige von Bedienungsanweisungen in dem ersten Anzeigebereich genutzt werden, beispielsweise Angaben zu den Rohrsegmenten, die in die Spanneinrichtung einzulegen sind. Nach der Ausbildung der Stumpfschweißverbindung kann das zumindest eine weitere Attribut dem Objektdatensatz in dem Datenmodell hinzugefügt werden. Beispielsweise kann die betreffende Stumpfschweißverbindung in dem zweiten Anzeigebereich dann als fertig geschweißt angezeigt werden. Eine versehentliche mehrmalige Herstellung der Stumpfschweißverbindung kann so sicher ausgeschlossen werden.

Mittels einer Druckeinrichtung, die an die Steuervorrichtung angeschlossen sein kann oder die die Steuervorrichtung aufweisen kann, kann nach der Ausbildung der Stumpfschweißverbindung eine Ausgabe eines Haftetiketts mit einer Widergabe des jeweiligen Objektdatensatzes der Stumpfschweißverbindung und/oder mit einer Widergabe eines diesen Objektdatensatz repräsentierenden Codes erfolgen. Die Druckeinrichtung kann durch einen Haftetikettendrucker ausgebildet sein, der in der Schweißmaschine integriert ist, oder über eine Schnittstelle an die Schweißmaschine angeschlossen ist. Zu jeder Stumpfschweißverbindung kann dann zumindest ein Haftetikett ausgedruckt werden, welches zumindest einen die Stumpfschweißverbindung betreffendem Objektdatensatz aufweist. Der Objektdatensatz kann dabei bereits das weitere Attribut umfassen, beispielsweise ein Herstellungsdatum der Stumpfschweißverbindung. Eine Bedienperson kann dann das Haftetikett auf einem der Rohrsegmente aufbringen, womit wesentliche Informationen zu der Stumpfschweißverbindung unmittelbar erkennbar werden. Die Widergabe des Objektdatensatzes kann in Text- bzw. Zeichenform auf dem Haftetikett erfolgen. Alternativ oder ergänzend kann das Haftetikett einen Code aufweisen, mit dem Informationen zu der Stumpfschweißverbindung ermittelbar sind. Dies kann beispielsweise ein Barcode oder ein QR-Code sein, der mit einem mobilen Endgerät gescannt werden kann.

Ein Datenmodell kann mit graphischen Bilddaten und/oder Vektordaten des Rohrleitungssystems, die mit den Objektdatensätzen ergänzt sein können, verwendet werden. Die graphischen Bilddaten bzw. Vektordaten können in zweidimensionaler oder dreidimensionaler Form vorliegen. Vorteilhaft können CAD-Daten oder andere bekannte graphische Datenformate die Objektdatensätze enthalten oder mit diesen verknüpft sein. Durch die graphische Darstellung des Rohrleitungssystems wird es möglich auf in Papierform vorliegende Planungsunterlagen bei der Herstellung der Stumpfschweißverbindung zu verzichten.

Ein Datenmodell kann mit dem Rohrsegment und/oder der Stumpfschweißverbindung als ein Objekt mit zugeordnetem Objektdatensatz verwendet werden. Jedes der Rohrsegmente und/oder die Stumpfschweißverbindung kann demnach in dem Datenmodell als ein Objekt definiert sein. Jedem dieser Objekte kann jeweils ein Objektdatensatz zugeordnet sein. Sämtliche Bauteile des Rohrleitungssystems und deren Stumpfschweißverbindungen können dann in dem Datenmodell eindeutig erfasst werden.

Das Datenmodell kann mit einer Stückliste des Rohrleitungssystems verwendet werden. So kann das Datenmodell in Form einer Stückliste in der Steuervorrichtung gespeichert sein und entsprechend einer Bedienperson dargestellt werden. Der Stückliste können dann die zu verschweißenden Rohrsegmente mit allen notwendigen Informationen bzw. Attributen der herzustellenden Stumpfschweißverbindung entnommen werden. Ergänzend zur Darstellung einer Stückliste kann eine graphische Darstellung des Datenmodells des Rohrleitungssystems vorgesehen sein.

Vorteilhaft kann das Verfahren in einer Abfolge der nachfolgenden Schritte durchgeführt werden:
a) Erzeugen des Datenmodells des Rohleitungssystems mit zumindest einem Rohr und einer Mehrzahl von Stumpfschweißverbindungen;
b) Übertragen und Speichern des Datenmodells in der Steuervorrichtung;
c) Auswählen der zu schweißenden Stumpfschweißverbindung;
d) Berechnen der Schweißparameter der Schweißvorrichtung durch die Steuervorrichtung auf Basis der Attribute des jeweiligen Objektdatensatzes;
e) Ausgeben einer Abfolge von an eine Bedienperson gerichtete Bedienungsanweisungen der Schweißmaschine;
f) Steuern der Schweißvorrichtung durch die Steuervorrichtung zur Ausführung von Herstellungsschritten;
g) Ermittlung des weiteren Attributs durch die Steuervorrichtung und Speichern in dem jeweiligen Objektdatensatz;
h) Ausgeben und/oder Übertragen des jeweiligen Objektdatensatzes oder des Datenmodells durch die Steuervorrichtung.

Zur Ausbildung von Schweißkontaktflächen können Rohrendquerschnitte der Rohrsegmente mit einer Werkzeugeinrichtung der Schweißvorrichtung spanend bearbeitet werden. So kann die Werkzeugeinrichtung zur spanenden Bearbeitung der Schweißkontaktflächen stationär angeordnet sein. Auch kann die Werkzeugeinrichtung einen Trennschnitt zur Ausbildung der Rohrsegmente ausführen, wobei der Trennschnitt gleichzeitig zur Ausbildung der Schweißkontaktflächen dienen kann. Folglich werden die Rohrsegmente dann aus einem Halbzeug durch die Werkzeugeinrichtung ausgebildet. Die Werkzeugeinrichtung kann aber auch die Rohrsegmente nach dem Einspannen in die Spanneinrichtung jeweils an ihren Schweißkontaktflächen so bearbeiten, dass diese in der Fügeebene spaltfrei aneinander anliegen können.

Weiter kann eine Übertragung des Datenmodells mittels der Steuervorrichtung mit einem externen Datennetzwerk erfolgen. Die Übertragung des Datenmodells kann wechselseitig erfolgen, beispielsweise von einem Computer auf die Steuervorrichtung und nach einer Änderung des Datenmodells durch die Hinzufügung von weiteren Attributen in der Steuervorrichtung durch Speichern auf dem Computer. Das externe Datennetzwerk kann zumindest einen Computer und eine Verbindung der Steuervorrichtung mit dem Computer umfassen. Die Verbindung kann durch eine Datenleitung oder einen bekannten Funkstandard auch drahtlos ausgebildet werden. Optional ist es dann auch möglich, dass das Datenmodell nur teilweise in der Steuervorrichtung gespeichert wird und lediglich vollständig auf einem Computer des externen Datennetzwerks vorhanden ist. In diesem Fall kann dann ein fortwährender Datenaustausch zwischen der Steuervorrichtung und dem Computer bzw. Server erfolgen. Insbesondere wird es dann auch möglich, Informationen über einen Herstellungsfortschritt und eventuelle Planungsänderungen des Rohrleitungssystems den an der Herstellung und Planung beteiligten Personen in Echtzeit zur Verfügung zu stellen.

Die erfindungsgemäße Schweißmaschine dient zur Herstellung einer Stumpfschweißverbindung zwischen Rohrsegmenten eines Rohres aus einem schweißbaren Kunststoffmaterial, wobei die Schweißmaschine eine Schweißvorrichtung aufweist, mit einer Spanneinrichtung zur Aufnahme jeweils zweier Rohrsegmente, mit einer Heizeinrichtung zum Aufschmelzen von Schweißkontaktflächen von Rohrendquerschnitten der Rohrsegmente, und mit einer Handhabungseinrichtung zur nachfolgenden Ausbildung einer die Rohrsegmente in einer Fügeebene miteinander verbindenden Stumpfschweißnaht durch Gegeneinanderpressen der Schweißkontaktflächen mit einem Fügedruck, wobei die Schweißvorrichtung von einer Steuervorrichtung der Schweißmaschine steuerbar ist, wobei in der Steuervorrichtung der Schweißvorrichtung ein Datenmodell eines Rohrleitungssystems mit zumindest einem Rohr und einer Mehrzahl von Stumpfschweißverbindungen gespeichert ist, wobei das Datenmodell zumindest einen die jeweilige Stumpfschweißverbindung repräsentierenden Objektdatensatz mit jeweils Attributen umfasst, wobei mittels der Steuervorrichtung für die jeweilige Stumpfschweißverbindung zumindest einen Schweißparameter der Schweißvorrichtung als ein weiteres Attribut ermittelbar und dieses dem Objektdatensatz hinzufügbar ist. Zu den Vorteilen der erfindungsgemäßen Schweißmaschine wird auf die Vorteilsbeschreibung des erfindungsgemäßen Verfahrens verwiesen.

Weitere vorteilhafte Ausführungsformen einer Schweißmaschine ergeben sich aus den Merkmalsbeschreibungen der auf den Verfahrensanspruch 1 rückbezogenen Unteransprüche.

Nachfolgend wird eine bevorzugte Ausführungsform des Verfahrens mit Darstellung einer bevorzugten Ausführungsform einer Schweißmaschine zur Ausführung des Verfahrens anhand der Zeichnungen näher erläutert.

Es zeigen:
- **Fig. 1**: eine perspektivische Ansicht einer Schweißmaschine;
- **Fig. 2**: ein Flussdiagramm für ein Verfahren zur Herstellung einer Stumpfschweißverbindung.

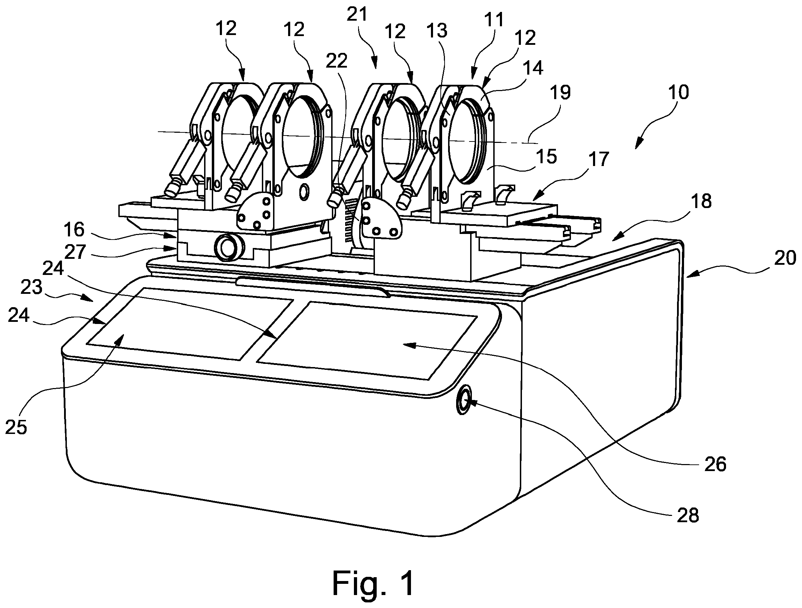

Die **Fig. 1** zeigt eine Schweißmaschine 10 zur Herstellung einer Stumpfschweißverbindung zwischen zwei hier nicht näher dargestellten Rohrsegmenten eines Rohres. Eine Schweißvorrichtung 21 der Schweißmaschine 10 umfasst eine Spanneinrichtung 11 mit vier Spannaufnahmen 12 die ihrerseits aus Spannbacken 13, 14 und 15 ausgebildet sind. Jeweils zwei der Spannaufnahmen 12 sind an Schlitten 16 und 17 einer Handhabungseinrichtung 18 der Schweißvorrichtung 21 angeordnet. Die Schlitten 16 und 17 sind relativ zueinander entlang einer Längsachse 19 eines herzustellenden Rohres mittels der Handhabungseinrichtung 18 bewegbar. Die Schlitten 16 und 17 sind dazu an einem Gestell 20 der Schweißmaschine 10, welches eine hier nicht näher dargestellte Führung für die Schlitten 16 und 17 ausbildet, angeordnet. Ein Antrieb der Handhabungseinrichtung 18 ist ebenfalls innerhalb des Gestells 20 angeordnet. Weiter umfasst die Schweißvorrichtung 21 eine Heizplatte 22. An dem Gestell 20 ist eine Bedieneinheit 23 der Schweißmaschine 10 angeordnet die zwei Bildschirme 24 aufweist, die ihrerseits einen ersten Anzeigebereich 25 und einen zweiten Anzeigebereich 26 ausbilden.

Bei einem Schweißvorgang werden zunächst von einer Bedienperson Rohrsegmente mittels der Spannbacken 13, 14 und 15 an jeweils zwei Spannaufnahmen 12 der jeweiligen Schlitten 16 und 17 eingespannt. Danach erfolgt, wenn erforderlich, eine Ausrichtung der Rohrsegmente relativ zueinander in Bezug auf die Längsachse 19. Hierzu ist an dem Schlitten 16 eine Querführung 27 ausgebildet. Nach einer eventuellen spanenden Bearbeitung von Schweißkontaktflächen der Rohrsegmente wird zwischen den Schweißkontaktflächen die Heizplatte 22 angeordnet, so dass Rohrendquerschnitte der Rohrsegmente mittels der Heizplatte aufgeschmolzen werden. Nachfolgend wird die Heizplatte entfernt und die Rohrsegmente werden mittels der Schlitten 16 und 17 mit einem Fügedruck gegeneinander gepresst, wobei eine Stumpfschweißnaht ausgebildet wird. Abschließend kann das so ausgebildete Rohr aus der Spannaufnahme 12 entnommen werden. Eine Bedienung der Schweißmaschine 10 durch eine Bedienperson erfolgt dabei unter anderem mittels der Bildschirme 24 und Bedienelemente 28 an der Bedieneinheit 23. Eine hier nicht dargestellte Steuervorrichtung der Schweißmaschine 10 steuert insbesondere einen Ablauf des Schweißverfahrens und die damit verbundenen Funktionen der Schweißmaschine 10.

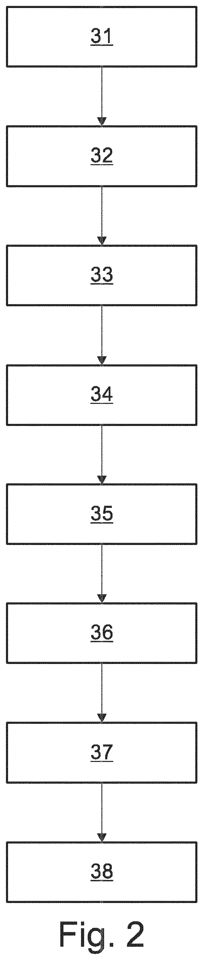

Die **Fig. 2** zeigt ein Flussdiagramm zur Durchführung des Verfahrens am Beispiel der in der **Fig. 1** dargestellten Schweißmaschine 10. In einem ersten Schritt 30 wird zunächst ein Datenmodell eines Rohrleitungssystems, welches mit der Schweißmaschine 10 hergestellt werden soll, erzeugt. Das Datenmodell kann beispielsweise an einem Computer konstruiert und in Form von graphischen Bilddaten oder Vektordaten auf dem Computer gespeichert werden. Das Datenmodell wird dann unabhängig von der Schweißmaschine 10 erzeugt. In einem zweiten Schritt 32 wird das Datenmodell an die Schweißmaschine 10 übertragen und in der Steuervorrichtung gespeichert. Diese Übertragung kann mittels eines Datenträgers, über eine Datenleitung oder über einen Funkstandard zur Datenübertragung erfolgen. In einem dritten Schritt 33 wird das Datenmodell in dem zweiten Anzeigebereich 26 in Form einer graphischen Darstellung oder einer Liste von der Steuervorrichtung dargestellt. Eine Bedienperson ist nun in der Lage eine zu schweißende Stumpfschweißverbindung zur Herstellung des Rohrleitungssystems an dem zweiten Anzeigebereich 26 auszuwählen. Bei der hier dargestellten Schweißmaschine 10 kann diese Auswahl durch eine Berührung der Darstellung der Stumpfschweißverbindung in dem zweiten Anzeigebereich 26 durch die Bedienperson erfolgen.

In einem vierten Schritt 34 berechnet nun die Steuervorrichtung die zur Ausbildung der Stumpfschweißverbindung erforderlichen Schweißparameter der Schweißvorrichtung 21. Dazu verwendet die Steuervorrichtung im Datenmodell enthaltene und jeweils der auszubildenden Stumpfschweißverbindung zugeordnete Objektdatensätze mit jeweils Attributen. Die Attribute können beispielsweise Angaben zu einer Rohrwandstärke und einem Kunststoffmaterial umfassen. Die Steuervorrichtung kann nun auf Basis dieser Attribute Schweißparameter der Schweißvorrichtung 21 berechnen, wie beispielsweise einen Fügedruck und eine Abkühlzeit. In einem fünften Schritt 35 wird eine Abfolge von Bedienungsanweisungen der Schweißmaschine 10 in dem ersten Anzeigebereich 25 angezeigt. Beispielsweise können dies Angaben zu den in der Spanneinrichtung 11 einzulegenden Rohrsegmenten sein. Dabei kann vorgesehen sein, dass die betreffende Bedienperson die Bedienungsanweisungen durch eine Berührung des ersten Anzeigebereichs 25 an entsprechender Stelle quittiert, beispielsweise nach dem Einlegen und Spannen der Rohrsegmente. In einem sechsten Schritt 36 steuert die Steuervorrichtung die Schweißvorrichtung 21 so, dass, wie zuvor beschrieben, die Stumpfschweißverbindung ausgebildet wird. In einem siebten Schritt 37 ermittelt die Steuervorrichtung ein weiteres Attribut vor oder während der Herstellung der Stumpfschweißverbindung, beispielsweise kann das weitere Attribut ein von der Steuervorrichtung berechneter Schweißparameter oder auch ein mit einem Sensor gemessener Wert, wie beispielsweise eine Umgebungstemperatur sein. Dieses weitere Attribut wird von der Steuervorrichtung in dem der Stumpfschweißverbindung zugeordneten Objektdatensatz gespeichert. In der einfachsten Ausführungsform kann das weitere Attribut lediglich die Information enthalten, dass die Stumpfschweißverbindung fertig ausgebildet ist.

Nach der fertigen Ausbildung der Stumpfschweißverbindung kann die Bedienperson das so ausgebildete Rohr aus der Spannaufnahme 12 entnehmen. Hierzu kann eine Bedienanweisung im ersten Anzeigebereich 25 angezeigt werden. In einem achten Schritt 38 erfolgt eine Ausgabe oder Übertragung des jeweiligen Objektdatensatzes oder des Datenmodells durch die Steuervorrichtung. So kann dann, wie in Schritt 32, auf umgekehrtem Wege das um Attribute ergänzte Datenmodell an einen Computer übermittelt und dort gespeichert werden.

## Patentansprüche

1. Verfahren zur Herstellung einer Stumpfschweißverbindung zwischen Rohrsegmenten eines Rohres aus einem schweißbaren Kunststoffmaterial mit einer Schweißmaschine (10), wobei zwei Rohrsegmente jeweils von einer Spanneinrichtung (11) einer Schweißvorrichtung (21) der Schweißmaschine aufgenommenen werden, wobei Schweißkontaktflächen von Rohrendquerschnitten der Rohrsegmente mittels einer Heizeinrichtung (22) der Schweißvorrichtung aufgeschmolzen und nachfolgend die Schweißkontaktflächen zur Ausbildung einer die Rohrsegmente in einer Fügeebene miteinander verbindenden Stumpfschweißnaht mit einem Fügedruck von einer Handhabungseinrichtung (18) der Schweißvorrichtung gegeneinander gepresst werden, wobei die Schweißvorrichtung von einer Steuervorrichtung der Schweißmaschine gesteuert wird,
**dadurch gekennzeichnet,**
**dass** in der Steuervorrichtung der Schweißvorrichtung ein Datenmodell eines Rohleitungssystems mit zumindest einem Rohr und einer Mehrzahl von Stumpfschweißverbindungen gespeichert wird, wobei das Datenmodell zumindest einen die jeweilige Stumpfschweißverbindung repräsentierenden Objektdatensatz mit jeweils Attributen umfasst, wobei die Steuervorrichtung für die jeweilige Stumpfschweißverbindung zumindest einen Schweißparameter der Schweißvorrichtung als ein weiteres Attribut ermittelt, und dieses dem Objektdatensatz hinzufügt.

2. Verfahren nach Anspruch 1,
**dadurch gekennzeichnet,**
**dass** das Datenmodell vor der Ausbildung der Stumpfschweißverbindung in einer Speichereinrichtung der Steuervorrichtung gespeichert wird.

3. Verfahren nach Anspruch 1 oder 2,
**dadurch gekennzeichnet,**
**dass** die Steuervorrichtung vor, während und/oder nach der Ausbildung der jeweiligen Stumpfschweißverbindung den zumindest einen Schweißparameter der Schweißvorrichtung (21) als das weitere Attribut ermittelt, wobei die Schweißparameter ein Fügedruck, eine Heizelementtemperatur, eine Gerätetemperatur, eine Umgebungstemperatur, ein Herstellungszeitpunkt, eine Schweißzeit und/oder eine Abkühlzeit sind.

4. Verfahren nach einem der vorangehenden Ansprüche,
**dadurch gekennzeichnet,**
**dass** die Steuervorrichtung die Schweißvorrichtung (21) in Abhängigkeit der Attribute des Objektdatensatzes steuert, wobei die Attribute ein Rohrsegmentdurchmesser, eine Rohrwandstärke, ein Kunststoffmaterial, ein Fertigungszeitpunkt, eine Herstellerbezeichnung, eine Artikelnummer und/oder eine Seriennummer sind.

5. Verfahren nach einem der vorangehenden Ansprüche,
**dadurch gekennzeichnet,**
**dass** mittels einer Anzeigeeinrichtung der Steuervorrichtung an eine Bedienperson gerichtete Bedienungsanweisungen der Schweißmaschine (10) und das Datenmodell ausgegeben werden.

6. Verfahren nach Anspruch 5,
**dadurch gekennzeichnet,**
**dass** die Anzeigeeinrichtung durch einen oder mehrere Bildschirme (24) ausgebildet wird, wobei in einem ersten Anzeigebereich (25) die Bedienungsanweisungen und in einem zweiten Anzeigebereich (26) das Datenmodell mit den Objektdatensäten und den jeweiligen Attributen angezeigt werden.

7. Verfahren nach einem der vorangehenden Ansprüche,
**dadurch gekennzeichnet,**
**dass** mittels einer Druckeinrichtung, die an die Steuervorrichtung angeschlossen ist oder die die Steuervorrichtung aufweist, nach der Ausbildung der Stumpfschweißverbindung, eine Ausgabe eines Haftetiketts mit einer Wiedergabe des jeweiligen Objektdatensatzes der Stumpfschweißverbindung und/oder mit einer Wiedergabe eines diesen Objektdatensatz repräsentierenden Codes erfolgt.

8. Verfahren nach einem der vorangehenden Ansprüche,
**dadurch gekennzeichnet,**
**dass** ein Datenmodell mit grafischen Bilddaten und/oder Vektordaten des Rohrleitungssystems, die mit den Objektdatensätzen ergänzt sind, verwendet wird.

9. Verfahren nach einem der vorangehenden Ansprüche,
**dadurch gekennzeichnet,**
**dass** ein Datenmodell mit dem Rohrsegment und/oder der Stumpfschweißverbindung als ein Objekt mit zugeordneten Objektdatensatz verwendet wird.

10. Verfahren nach einem der vorangehenden Ansprüche,
**dadurch gekennzeichnet,**
**dass** ein Datenmodell mit einer Stückliste des Rohrleitungssystems verwendet wird.

11. Verfahren nach einem der vorangehenden Ansprüche,
**dadurch gekennzeichnet,**
**dass** das Verfahren in einer Abfolge der nachfolgenden Schritte durchgeführt wird:
a) Erzeugen des Datenmodells des Rohleitungssystems mit zumindest einem Rohr und einer Mehrzahl von Stumpfschweißverbindungen;
b) Übertragen und Speichern des Datenmodells in der Steuervorrichtung;
c) Auswählen der zu schweißenden Stumpfschweißverbindung;
d) Berechnen der Schweißparameter der Schweißvorrichtung (21) durch die Steuervorrichtung auf Basis der Attribute des jeweiligen Objektdatensatzes;
e) Ausgeben einer Abfolge von an eine Bedienperson gerichtete Bedienungsanweisungen der Schweißmaschine (10);
f) Steuern der Schweißvorrichtung (21) durch die Steuervorrichtung zur Ausführung von Herstellungsschritten;
g) Ermittlung des weiteren Attributs durch die Steuervorrichtung und Speichern in dem jeweiligen Objektdatensatz;
h) Ausgeben und/oder Übertragen des jeweiligen Objektdatensatzes oder des Datenmodells durch die Steuervorrichtung.

12. Verfahren nach einem der vorangehenden Ansprüche,
**dadurch gekennzeichnet,**
**dass** zur Ausbildung von Schweißkontaktflächen Rohrendquerschnitte der Rohrsegmente mit einer Werkzeugeinrichtung der Schweißvorrichtung (21) spanend bearbeitet werden.

13. Verfahren nach einem der vorangehenden Ansprüche,
**dadurch gekennzeichnet,**
**dass** eine Übertragung des Datenmodells mittels der Steuervorrichtung mit einem externen Datennetzwerk erfolgt.

14. Schweißmaschine (10) zur Herstellung einer Stumpfschweißverbindung zwischen Rohrsegmenten eines Rohres aus einem schweißbaren Kunststoffmaterial, wobei die Schweißmaschine eine Schweißvorrichtung (21) aufweist, mit einer Spanneinrichtung (11) zur Aufnahme jeweils zweier Rohrsegmente, mit einer Heizeinrichtung (22) zum Aufschmelzen von Schweißkontaktflächen von Rohrendquerschnitten der Rohrsegmente, und mit einer Handhabungseinrichtung (18) zur nachfolgenden Ausbildung einer die Rohrsegmente in einer Fügeebene miteinander verbindenden Stumpfschweißnaht durch Gegeneinanderpressen der Schweißkontaktflächen mit einem Fügedruck, wobei die Schweißvorrichtung von einer Steuervorrichtung der Schweißmaschine steuerbar ist,
**dadurch gekennzeichnet,**
**dass** in der Steuervorrichtung der Schweißvorrichtung ein Datenmodell eines Rohleitungssystems mit zumindest einem Rohr und einer Mehrzahl von Stumpfschweißverbindungen gespeichert ist, wobei das Datenmodell zumindest einen die jeweilige Stumpfschweißverbindung repräsentierenden Objektdatensatz mit jeweils Attributen umfasst, wobei mittels der Steuervorrichtung für die jeweilige Stumpfschweißverbindung zumindest einen Schweißparameter der Schweißvorrichtung als ein weiteres Attribut ermittelbar und dieses dem Objektdatensatz hinzufügbar ist.

## Claims

1. A method for producing a butt welded joint between tube segments of a tube made of a weldable plastic material using a welding machine (10), two tube segments each being held by a clamping apparatus (11) of a welding device (21) of the welding machine, welding contact surfaces of tube end cross sections of the tube segments being fused by means of a heating apparatus (22) of the welding device and the welding contact surfaces subsequently being pressed against each other by a handling apparatus (18) of the welding device using a joining pressure to form a butt welded seam connecting the tube segments to each other in a joining plane, the welding device being controlled by a control device of the welding machine,
**characterized in that**
a data model of a tube system having at least one tube and a plurality of butt welded joints are stored in the control device of the welding device, the data model comprising at least one object dataset representing the corresponding butt welded joint and each having attributes, the control device detecting at least one weld parameter of the welding device as another attribute for the corresponding butt welded joint and adding this weld parameter to the object dataset.

2. The method according to claim 1,
**characterized in that**
the data model is stored in a storage apparatus of the control device before producing the butt welded joint.

3. The method according to claim 1 or 2,
**characterized in that**
the control device detects the at least one weld parameter of the welding device (21) as the other attribute before, while and/or after producing the corresponding butt welded joint, the weld parameter being a joining pressure, a heating-element temperature, a device temperature, an ambient temperature, at point of production time, a weld time and/or a cooling time.

4. The method according to any one of the preceding claims,
**characterized in that**
the control device controls the welding device (21) as a function of the attributes of the object dataset, the attributes being a tube segment diameter, a tube wall thickness, a plastic material, a point of fabrication time, a producer's designation, an article number and/or a serial number.

5. The method according to any one of the preceding claims,
**characterized in that**
instructions for the welding machine (10) addressed to a user and the data model are output by means of a display apparatus of the control device.

6. The method according to claim 5,
**characterized in that**
the display apparatus is formed by one or more screens (24), the instructions being displayed in a first display area (25) and the data model having the object datasets and the corresponding attributes being displayed in a second display area (26).

7. The method according to any one of the preceding claims,
**characterized in that**
an adhesive label having a rendering of the corresponding object dataset of the butt welded joint and/or having a rendering of a code representing this object dataset is output by means of printer, which is connected to the control device or has the control device, after the butt welded joint has been produced.

8. The method according to any one of the preceding claims,
**characterized in that**
a data model is used having graphic image data and/or vector data of the tube system which are supplemented by the object dataset.

9. The method according to any one of the preceding claims,
**characterized in that**
a data model having the tube segment and/or the butt welded joint is used as an object having an associated object dataset.

10. The method according to any one of the preceding claims,
**characterized in that**
a data model is used having a parts list of the tube system.

11. The method according to any one of the preceding claims,
**characterized in that**
the method is executed in a sequence of the following steps:
a. generating the data model of the tube system having at least one tube and a plurality of butt welded joints.
b. transferring and storing the data model in the control device.
c. selecting the butt welded joint to be welded.
d. computing the weld parameter of the welding device (21) via the control device based on the attributes of the corresponding object dataset.
e. outputting a sequence of instructions for the welding machine (10) addressed to a user.
f. controlling the welding device (21) via the control device for executing the production steps.
g. detecting the other attributes via the control device and storing them in the corresponding object dataset.
h. outputting and/or transferring the corresponding object dataset or the data model via the control device.

12. The method according to any one of the preceding claims,
**characterized in that**
tube end cross sections of the tube segments are machined using a tool of the welding device (21) to form welding contact surfaces.

13. The method according to any one of the preceding claims,
**characterized in that**
the data model is transferred by means of the control device using an external data network.

14. A welding machine (10) for producing a butt welded joint between tube segments of a tube made of a weldable plastic material, the welding machine having a welding device (21), a clamping apparatus (11) for holding two tube segments in each instance, a heating element (22) for fusing welding contact surfaces of tube end cross sections of the tube segments, and a handling apparatus (18) for the subsequent production of a butt welded seam connecting the tube segments to each other in a connecting plane by pressing the welding contact surfaces against each other using a joining pressure, the welding device being controllable via a control device of the welding machine,
**characterized in that**
a data model of a tube system having at least one tube and a plurality of butt welded joints is stored in the control device of the welding device, the data model comprising at least one object dataset representing the corresponding butt welded joint and each having attributes, the control device detecting at least one weld parameter of the welding device as another attribute for the corresponding butt welded joint and adding this weld parameter to the object dataset.

## Revendications

1. Procédé pour produire une connexion par soudage en bout entre des tronçons de tuyau d'un tuyau en matière plastique soudable à l'aide d'une machine à souder (10), deux tronçons de tuyau étant chacun maintenus par un appareil de serrage (11) d'un dispositif à souder (21) de la machine à souder, des zones de contact à souder de la section transversale de l'extrémité de tuyau étant fondues au moyen d'un appareil de chauffage (22) du dispositif à souder et les zones de contact à souder étant ensuite pressées l'une contre l'autre par un appareil de manutention (18) du dispositif à souder à l'aide d'une pression d'assemblage pour former un cordon de soudure en bout reliant les tronçons de tuyau l'un à l'autre dans un plan d'assemblage, le dispositif à souder étant commandé par un dispositif de contrôle de la machine à souder,
**caractérisé en ce**
**qu'**un modèle de données d'un système de tuyauterie ayant au moins un tuyau et une pluralité de connexions par soudage en bout est stocké dans le dispositif de contrôle du dispositif à souder, le modèle de données comprenant au moins un ensemble de données d'objets représentant la connexion par soudage en bout correspondante et ayant chacun des attributs, le dispositif de contrôle détectant au moins un paramètre de soudage du dispositif à souder comme autre attribut pour la connexion par soudage en bout correspondante et ajoutant ce paramètre de soudage à l'ensemble de données d'objets.

2. Procédé selon la revendication 1,
**caractérisé en ce que**
le modèle de données est stocké dans un appareil de stockage du dispositif de contrôle avant de réaliser la connexion par soudage en bout.

3. Procédé selon la revendication 1 ou la revendication 2,
**caractérisé en ce que**
le dispositif de contrôle détecte l'au moins un paramètre de soudage du dispositif à souder (21) comme autre attribut avant, pendant et/ou après la réalisation de la connexion par soudage en bout correspondante, le paramètre de soudage étant une pression d'assemblage, une température de l'appareil de chauffage, une température du dispositif, une température ambiante, un instant de production, un temps de soudage et/ou un temps de refroidissement.

4. Procédé selon l'une quelconque des revendications précédentes,
**caractérisé en ce que**
le dispositif de contrôle commande le dispositif à souder (21) en fonction des attributs de l'ensemble de données d'objets, les attributs étant un diamètre du tronçon de tuyau, une épaisseur de la paroi de tuyau, une matière plastique, un instant de fabrication, une identification choisie par le fabricant, un numéro d'article et/ou un numéro de série.

5. Procédé selon l'une quelconque des revendications précédentes,
**caractérisé en ce que**
des instructions destinées à la machine à souder (10) adressées à un utilisateur et le modèle de données sont sorties au moyen d'un dispositif d'affichage du dispositif de contrôle.

6. Procédé selon la revendication 5,
**caractérisé en ce que**
le dispositif d'affichage est formé par un ou plusieurs écrans (24), les instructions étant affichées dans une première zone d'affichage (25) et le modèle de données ayant l'ensemble de données d'objets et les attributs correspondants étant affichés dans une deuxième zone d'affichage (26).

7. Procédé selon l'une quelconque des revendications précédentes,
**caractérisé en ce**
**qu'**une étiquette autocollante ayant un rendu de l'ensemble de données d'objets correspondant de la connexion par soudage en bout et/ou ayant un rendu d'un code représentant cet ensemble de données d'objets est obtenue au moyen d'une imprimante, qui est connectée au dispositif de contrôle ou a le dispositif de contrôle, après que la connexion par soudage en bout a été réalisée.

8. Procédé selon l'une quelconque des revendications précédentes,
**caractérisé en ce**
**qu'**un modèle de données est utilisé qui a des données d'image graphiques et/ou des données vectorielles du système de tuyauterie qui sont complétées par l'ensemble de données d'objets.

9. Procédé selon l'une quelconque des revendications précédentes,
**caractérisé en ce**
**qu'**un modèle de données ayant le tronçon de tuyau et/ou la connexion par soudage en bout est utilisé comme objet ayant un ensemble de données d'objets associé.

10. Procédé selon l'une quelconque des revendications précédentes,
**caractérisé en ce**
**qu'**un modèle de données est utilisé qui a une liste de pièces du système de tuyauterie.

11. Procédé selon l'une quelconque des revendications précédentes,
**caractérisé en ce que**
le procédé est exécuté selon une séquence des étapes suivantes :
a. la génération du modèle de données du système de tuyauterie ayant au moins un tuyau et une pluralité de connexions par soudage en bout.
b. le transfert et le stockage du modèle de données dans le dispositif de contrôle.
c. la sélection de la connexion par soudage en bout à souder.
d. le calcul du paramètre de soudage du dispositif à souder (21) par l'intermédiaire du dispositif de contrôle sur la base des attributs de l'ensemble de données d'objets correspondant.
e. la sortie d'une séquence d'instructions destinées à la machine à souder (10) adressées à un utilisateur.
f. la commande du dispositif à souder (21) par l'intermédiaire du dispositif de contrôle pour exécuter des étapes de production.
g. la détection de l'autre attribut par l'intermédiaire du dispositif de contrôle et le stockage dans l'ensemble de données d'objets correspondant.
h. la sortie et/ou le transfert de l'ensemble de données d'objets correspondant ou le modèle de données par l'intermédiaire de dispositif de contrôle.

12. Procédé selon l'une quelconque des revendications précédentes,
**caractérisé en ce que**
des sections transversales de l'extrémité de tuyau sont usinées à l'aide d'un outil du dispositif à souder (21) pour former une zone de contact à souder.

13. Procédé selon l'une quelconque des revendications précédentes,
**caractérisé en ce que**
le modèle de données est transféré au moyen du dispositif de contrôle à l'aide d'un réseau de données externe.

14. Machine à souder (10) pour produire une connexion par soudage en bout entre des tronçons de tuyau d'un tuyau en matière plastique soudable, la machine à souder ayant un dispositif à souder (21), un appareil de serrage (11) pour maintenir deux tronçons de tuyau à chaque fois, un élément de chauffage (22) pour faire fondre la zone de contact à souder de la section transversale de l'extrémité de tuyau, et un appareil de manutention (18) pour la production ultérieure d'un cordon de soudure en bout reliant les tronçons de tuyau les uns aux autres dans un plan d'assemblage en pressant la zone de contact à souder les uns contre les autres à l'aide d'une pression d'assemblage, le dispositif à souder étant commandé par un dispositif de contrôle de la machine à souder,
**caractérisé en ce**
**qu'**un modèle de données d'un système de tuyauterie ayant au moins un tuyau et une pluralité de connexions par soudage en bout est stocké dans le dispositif de contrôle du dispositif à souder, le modèle de données comprenant au moins un ensemble de données d'objets représentant la connexion par soudage en bout correspondante et ayant chacun des attributs, le dispositif de contrôle détectant au moins un paramètre de soudage du dispositif à souder comme autre attribut pour la connexion par soudage en bout correspondante et ajoutant ce paramètre de soudage à l'ensemble de données d'objets.
